# EUROPEAN PATENT SPECIFICATION

(11) **EP 3 021 601 B1**
(45) Date of publication and mention of the grant of the patent: **22.12.2021**
(21) Application number: 13891523.6
(22) Date of filing: 14.08.2013
(51) Int. Cl.: H04L 29/08, H04L 29/12, H04W 4/70, H04W 76/14

(54) **METHOD AND DEVICE FOR SENDING TRIGGER MESSAGE**
VERFAHREN UND VORRICHTUNG ZUM SENDEN VON AUSLÖSERNACHRICHTEN
PROCÉDÉ ET DISPOSITIF POUR ENVOYER UN MESSAGE DÉCLENCHEMENT

(43) Date of publication of application: 18.05.2016
(73) Proprietor: Huawei Technologies Co., Ltd., Longgang District Shenzhen, Guangdong 518129 (CN)
(72) Inventor: YU, Qi, Shenzhen Guangdong 518129 (CN); ZHANG, Wanqiang, Shenzhen Guangdong 518129 (CN)
(74) Representative: Goddar, Heinz J.
(86) International application number: PCT/CN2013/081429
(87) International publication number: WO 2015/021608

(56) References cited:
- WO-A1-2013/113182
- WO-A1-2013/113186
- CN-A- 102 625 291
- CN-A- 102 740 452
- CN-A- 102 958 025
- CN-A- 103 096 264
- "3rd Generation Partnership Project; Technical Specification Group Services and System Aspects; System improvements for Machine-Type Communications (MTC) (Release 11)", 3GPP DRAFT; 23888-B00, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 23 July 2013 (2013-07-23), XP050725500, Retrieved from the Internet: URL:http://www.3gpp.org/ftp/tsg_sa/WG2_Arc h/Latest_SA2_Specs/Rel-11/ [retrieved on 2013-07-23]
- "3rd Generation Partnership Project; Technical Specification Group Services and System Aspects; Architecture enhancements to facilitate communications with packet data networks and applications (Release 11)", 3GPP DRAFT; 23682-B40, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 23 July 2013 (2013-07-23), XP050725491, Retrieved from the Internet: URL:http://www.3gpp.org/ftp/tsg_sa/WG2_Arc h/Latest_SA2_Specs/Rel-11/ [retrieved on 2013-07-23]

## Description

### TECHNICAL FIELD

The present invention relates to the field of mobile communications technologies, and in particular, to a method for sending a trigger message, and a device.

### BACKGROUND

Machine-to-machine communications (Machine-to-machine Communications, M2M for short) is a networked application and service that uses smart machine-to-machine interactions as a core. The machine-to-machine communications implement data communication without manual intervention by building a wireless or wired communications module and application processing logic into a machine, so as to meet a requirement of a user for informatization in aspects such as monitoring, scheduling commanding, data collection, and measurement.

Currently, the M2M communications may be based on a wireless manner and a wired manner. The wireless manner includes a cellular network and short-range transmission, where a 3rd Generation Partnership Project (The 3^{rd} Generation Partnership Project, 3GPP) cellular network is a widely used manner. Currently, the 3GPP supports three M2M models, including a direct model, an indirect model, and a hybrid model. The direct model refers to that an M2M application server (Application Server, AS for short) directly communicates with a gateway GPRS support node (Gateway GPRS Support Node, GGSN) or a packet data network gateway (Packet Data Network Gateway, PDN Gateway for short). The indirect model refers to that the AS communicates with the GGSN or the PDN Gateway by using an SCS. In the indirect model, the service capability server (Service Capability Server, SCS) may be controlled by a 3GPP operator or may be controlled by an M2M service provider. The hybrid model refers to that both the direct model and the indirect model exist.

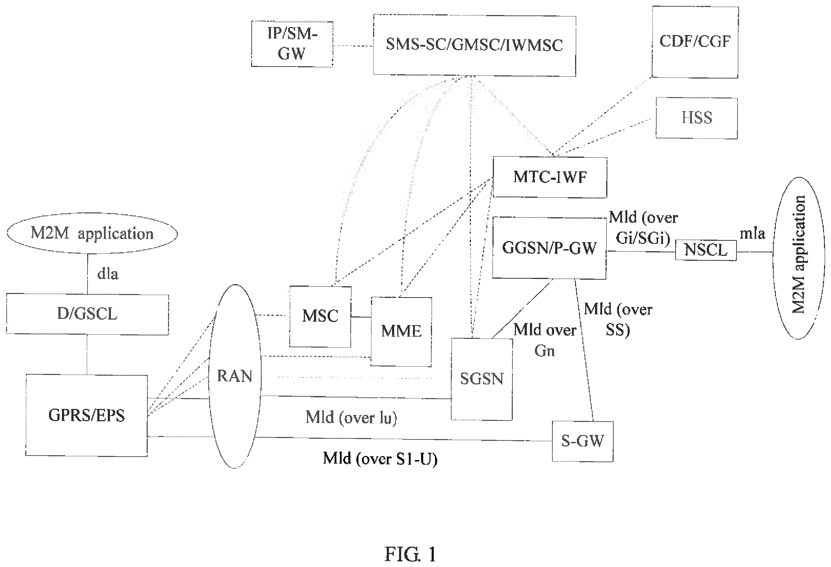

FIG. 1 is an architectural diagram of a direct model, supported by the European Telecommunications Standards Institute (European Telecommunications Standards Institute, ETSI for short) for machine-to-machine communications, for interworking between an M2M network and a 3GPP network in the prior art. A manner is as follows: M2M UE on the left side of FIG. 1 has accessed the 3GPP network and accessed a device trigger application server (Device Trigger-Application Server, DT-AS for short), where the DT-AS belongs to the 3GPP network, and the DT-AS is a server controlled by an operator, and a machine type communication (Machine Type Communications, MTC) device of a network of the operator may first establish a user plane bearer with the DT-AS. The DT-AS may be a separate logical entity, or a function of the DT-AS may be set in the GGSN or the PGW.

A third-party AS is corresponding to a network service capability layer (Network Service capability layer, NSCL) and a machine-to-machine communications application (M2M Application) in the figure. The third-party AS does not belong to the 3GPP network. When the third-party AS needs to establish a connection with the M2M UE, the third-party AS needs to send a trigger message to the M2M UE. According to an existing signaling flow, the third-party AS needs to first send the trigger (trigger) message destined for the M2M UE to the DT-AS, so that the DT-AS can forward the trigger message to the M2M UE by using an existing connection. The M2M UE acquires an identifier of the third-party AS according to the received trigger message, and establishes a connection with the third-party AS. However, a problem existing in the prior art is that: the DT-AS cannot identify the trigger message sent by the third-party AS, so that the trigger message cannot be routed to the M2M UE, and consequently, the M2M UE cannot establish a connection with the third-party AS.

3GPP TR 23.888, v11.0.0 "System improvements for Machine-Type Communications (MTC)" discloses technical specification group services and system aspects and system improvements for machine-type communication. A scenario is disclosed where a MTC server is arranged outside the boundary of a 3GGP network. In an example of a high-level information flow for device triggering using user plane, an MTC server sends a device trigger request to an MTC IWF. The MTC IWF sends a delivery request to an MTC device which, in turn, responds with an delivery acknowledgement. The delivery acknowledgement is forwarded from the MTC IWF to the MTC server which then establishes an application signaling between the MTC device and the MTC server.

WO 2013/1131 82 A1 discloses a method of sending MTC UE triggering information, comprising: an MTC server sends MTC UE triggering information to an MTC-IWF; the MTC-IWF packages the triggering information as a short message, and sends the short message to an MTC UE service node by means of a T5 interface; the service node, which receives by means of a short message the triggering information sent by the MTC-IWF, sends the triggering information to the MTC UE by means of control signaling or short message. Also disclosed in the present invention are a system for sending MTC UE triggering information and an MTC UE. The present invention enables the sending of MTC UE triggering information to the MTC UE by means of a T5 interface.

### SUMMARY

The present invention provides methods for sending a trigger message and corresponding Application Servers as claimed in the appendent independent claims.

Preferred embodiments are covered by the appended dependent claims.

### BRIEF DESCRIPTION OF DRAWINGS

The scope of the invention is defined by the appended claims.
FIG. 1 is an architectural diagram of a direct model, supported by the ETSI, for interworking between an M2M network and a 3GPP network in the prior art;
FIG. 2 is an architectural diagram of an M2M network in the prior art;
FIG. 3 is an architectural diagram of a network in which a 2G/3G/Long Term Evolution LTE network supports an M2M network in the prior art;
FIG. 4 is an interaction diagram of sending a trigger message in the prior art;
FIG. 5 is an interaction diagram of sending a trigger message according to an embodiment of the present invention;
FIG. 6 is a flowchart of a method for sending a trigger message according to an embodiment of the present invention;
FIG. 7 is a flowchart of a method for sending a trigger message according to an embodiment of the present invention;
FIG. 8 is a flowchart of a method for sending a trigger message according to an embodiment of the present invention;
FIG. 9 is a schematic structural diagram of an application server according to an embodiment of the present invention;
FIG. 10 is a schematic structural diagram of a device trigger application server according to an embodiment of the present invention;
FIG. 11 is a schematic structural dlagram of M2M UE according to an embodiment of the present invention;
FIG. 12 is a schematic structural diagram of an application server according to an embodiment of the present invention;
FIG. 13 is a schematic structural diagram of a device trigger application server according to an embodiment of the present invention; and
FIG. 14 is a schematic structural diagram of machine-to-machine communications user equipment according to an embodiment of the present invention.

### DESCRIPTION OF EMBODIMENTS

To make the objectives, technical solutions, and advantages of the present invention clearer and more comprehensible, the following further describes the present invention in detail with reference to the accompanying drawings and embodiments. It should be understood that the specific examples described herein are merely used to explain the present invention, whose scope is defined by the appended claims.

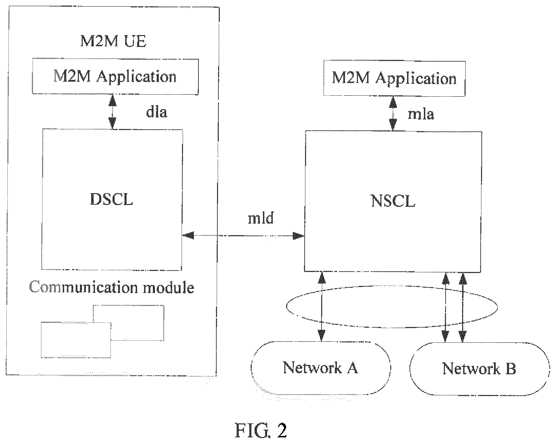

Referring to FIG. 2, FIG. 2 is an architectural diagram of an M2M network in the prior art. An architecture, on the left side of FIG. 1, in which an M2M Application and a D/GSCL (Device/gateway service capability layer) communicate with each other over a dla interface is equivalent to an architecture, on the left side of FIG. 2, in which an M2M Application and a DSCL communicate with each other over a dla interface. An architecture, on the right side of FIG. 1, in which an M2M Application and an NSCL communicate with each other over an mla interface is equivalent to an architecture, on the right side of FIG. 2, in which an M2M Application and an NSCL communicate with each other over an mla interface. On M2M user equipment (User Equipment, UE for short), an M2M device application (Device Application, DA for short) communicates with an M2M device service capability layer (Device Service Capability Layer, DSCL for short) over a dla interface. On the side of an M2M network, an M2M network application (Network application, NA for short) communicates with an M2M NSCL over an mla interface. The European Telecommunications Standards Institute (European Telecommunications Standards Institute, ETSI for short) for machine-to-machine communications defines an mld interface between the DSCL and the NSCL. The M2M NA may access and load the M2M DA on the M2M UE over the mld interface.

Currently, the M2M communications may be based on a wireless manner and a wired manner. The wireless manner includes a cellular network and short-range transmission, and a 3GPP cellular network is a widely used manner.

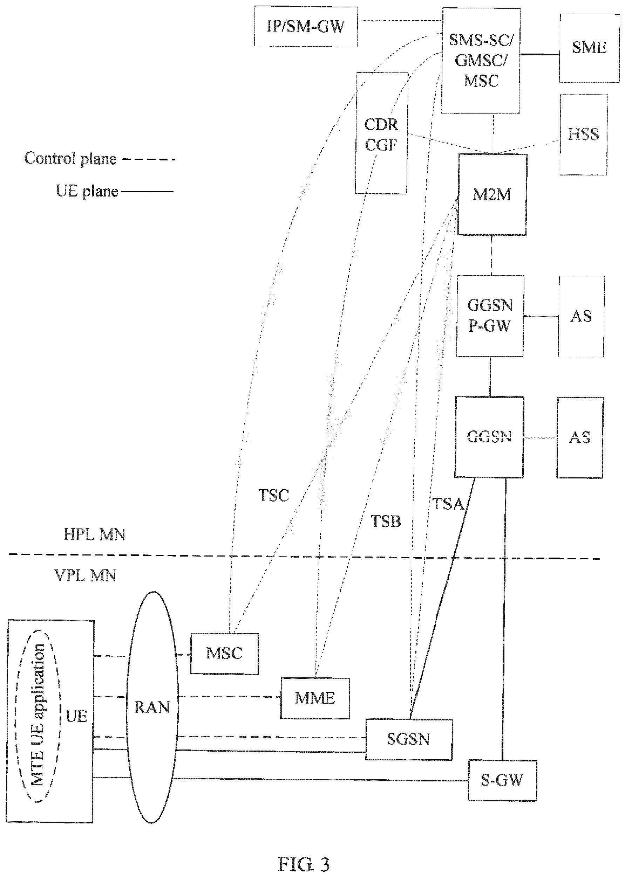

Referring to FIG. 3, FIG 3 is an architectural dlagram of a network in which a 2G/3G/Long Term Evolution (Long Term Evolution, LTE for short) network supports an M2M network in the prior art. Based on the network architecture in FIG. 3, UE on the left side of FIG. 3 is replaced with the M2M architecture on the left side of FIG. 2 and an AS on the right side of FIG. 3 is replaced with the M2M architecture on the right side of FIG. 2, to form the architectural diagram of the network in FIG. 1. FIG. 3 shows related nodes on a user plane in a direct model. A 3G core network mainly includes three logical function entities: a serving general packet radio service (General Packet Radio Service, GPRS) support node (Serving GPRS Support Node, SGSN for short), a Serving Gateway, and a packet data network gateway (Packet Data Network Gateway, PDN Gateway for short). A DT-AS is a server controlled by an operator, and an MTC device in a network of the operator may first establish a user plane bearer with the DT-AS. The DT-AS may be a separate logic entity, or may be co-located with a GGSN or a PGW.

The AS is an external third-party server, and is mapped, in the present invention, to an NSCL of the ETSI and an Application.

Currently, the 3GPP supports three M2M models, including a direct model, an indirect model, and a hybrid model. The present invention relates to the direct model, where the direct model refers to that the AS directly communicates with the GGSN or the PDN Gateway.

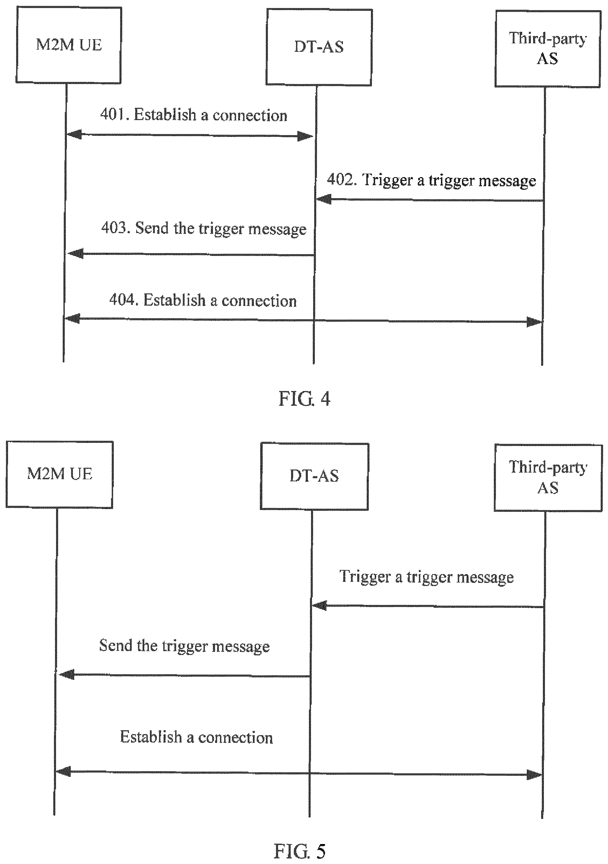

Referring to FIG. 4, FIG. 4 is an interaction diagram of sending a trigger message in the prior art. As shown in FIG. 4, M2M UE establishes a network connection with a DT-AS, where the DT-AS is a server in a 3GPP network, the third-party AS is an M2M server outside the 3GPP network, the M2M UE registers with the third-party AS in advance, and the third-party AS stores related information about the M2M UE, including an identifier of the M2M UE. When the third-party AS needs to establish a connection with the M2M UE, the third-party AS triggers a trigger message.

Step 401: The M2M UE establishes a network connection with the DT-AS.

Step 402: When the third-party AS needs to establish a connection with the M2M UE, the third-party AS triggers a trigger message and sends the trigger message to the DT-AS, and the DT-AS receives the trigger message sent by the third-party AS.

Step 403: The DT-AS sends the trigger message to the M2M UE.

Step 404: The M2M UE establishes a connection with the third-party AS.

In step 402, the DT-AS cannot identify the trigger message sent by the AS, so that the trigger message cannot be sent to the M2M UE, and the M2M UE cannot establish a network connection with the third-party AS.

The M2M UE is connected to a network at which the DT-AS is located, the DT-AS is a server in a 3GPP network, and the third-party AS is an M2M server outside the 3GPP network.

Referring to FIG. 5, FIG. 5 is an interaction diagram of sending a trigger message according to an embodiment of the present invention. As shown in FIG. 5, an M2M UE establishes a network connection with a DT-AS, where the DT-AS is a server in a 3GPP network, the third-party AS is an M2M server outside the 3GPP network, the M2M UE registers with the third-party AS in advance, and the third-party AS stores related information about the M2M UE, including an identifier of the M2M UE. When the third-party AS needs to acquire data of the M2M UE, the third-party AS triggers a trigger message. For example, it is assumed that the third-party AS is a server of an electricity meter company. When the electricity meter company needs to report data of an electricity meter of user equipment, the third-party AS needs to trigger a trigger message, carry an identifier of the user equipment in the trigger message, and send the trigger message to the DT-AS. The DT-AS determines, according to the identifier of the user equipment, whether the user equipment has registered with the 3GPP network, and if the user equipment has registered with the 3GPP network, the DT-AS sends the trigger message to the M2M UE, so that the M2M UE establishes a connection with the third-party AS, and the server of the electricity meter company can read the data of the electricity meter of the user equipment.

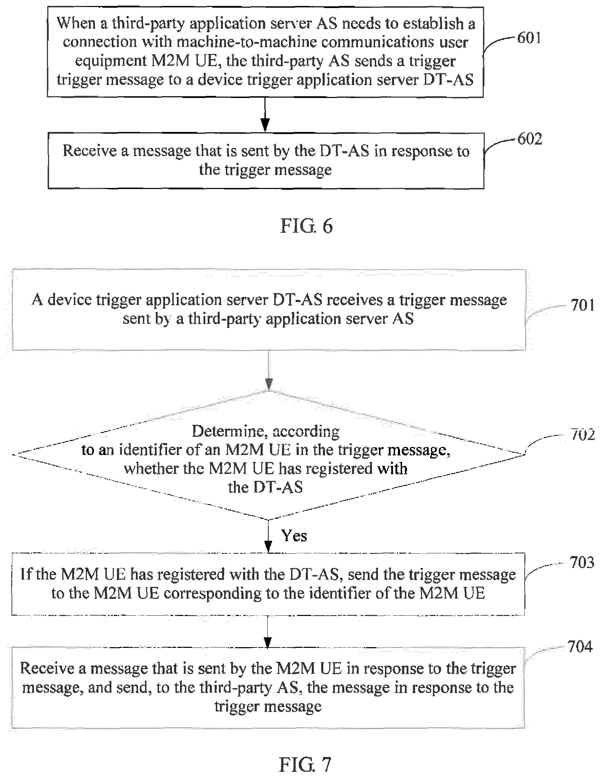

Referring to FIG. 6, FIG. 6 is a flowchart of a method for sending a trigger message according to an embodiment of the present invention. As shown in FIG. 6, the method includes the following steps:
Step 601: When a third-party application server AS needs to establish a connection with machine-to-machine communications user equipment M2M UE, the third-party AS sends a trigger trigger message to a device trigger application server DT-AS.

The trigger message includes at least an identifier of the machine-to-machine communications user equipment M2M UE, so that the DT-AS determines, according to the identifier of the M2M UE, whether the M2M UE has registered with the DT-AS, and if the M2M UE has registered with the DT-AS, sends the trigger message to the M2M UE, receives a message that is sent by the M2M UE in response to the trigger message, and sends, to the third-party AS, the message in response to the trigger message.

Specifically, as shown in FIG. 5, when the third-party application server AS needs to establish a connection with the machine-to-machine communications user equipment M2M UE, the third-party AS sends a trigger trigger message to the device trigger application server DT-AS.

Optionally, when the DT-AS determines, according to the identifier of the M2M UE, that the M2M UE has not registered with the DT-AS, the DT-AS returns a response to the third-party AS, where a failure cause is carried in the response.

S602: Receive a message that is sent by the DT-AS in response to the trigger message.

The third-party AS prestores the identifier of the M2M UE, the M2M UE is connected to a network at which the DT-AS is located, the DT-AS is a server in a 3GPP network, and the third-party AS is an M2M server outside the 3GPP network.

Specifically, when the M2M UE registers with the third-party AS, the third-party AS prestores the identifier of the M2M UE.

Before the sending, by the third-party AS, the trigger message to the DT-AS, the method further includes:
acquiring, by the third-party AS, an IP address of the DT-AS and/or a port number of the DT-AS; and
setting an IP address of the third-party AS and/or the port number of the DT-AS that are/is in the trigger message to a preset value or values, where the preset value or value is/are used by the DT-AS to identify the trigger message; or
setting the IP address and/or the port number of the DT-AS that are/is in the trigger message to a preset IP address and/or a preset port number respectively, so that when a message is received by using the preset IP address and/or the preset port number, the DT-AS can identify the message as the trigger message.

Specifically, the third-party AS may set the IP address of the third-party AS in the trigger message to 1.1.0.0, and the DT-AS and the third-party AS agree, in advance, on that when the IP address of the third-party AS is 1.1.0.0, the DT-AS can identify the message as the trigger message.

The third-party AS may set the port number of the DT-AS in the trigger message to 1, and the DT-AS and the third-party AS agree, in advance, on that when the port number of the DT-AS in the trigger message is 1, the DT-AS can identify the message as the trigger message.

The third-party AS may set the IP address and the port number of the DT-AS in the trigger message to 1.1.1.1 and 0 respectively, and when a trigger message is received by using the IP address 1.1.1.1 and the port number 0, the DT-AS can identify the message as the trigger message.

The acquiring, by the third-party AS, an IP address of the DT-AS and/or a port number of the DT-AS includes:
acquiring the IP address and/or the port number of the DT-AS that are/is preset in the third-party AS; or
acquiring an external IP address, of the M2M UE, preset in the third-party AS, and sending the external IP address to a DNS so as to acquire, by means of parsing, the IP address of the DT-AS.

The third-party AS communicates with the DT-AS by using the diameter protocol or the HTTP protocol.

The present invention provides a method for sending a trigger message. When a third-party application server AS needs to establish a connection with machine-to-machine communications user equipment M2M UE, the third-party AS sends a trigger trigger message to a device trigger application server DT-AS, where the trigger message includes at least an identifier of the machine-to-machine communications user equipment M2M UE. The DT-AS determines, according to the identifier of the M2M UE, whether the M2M UE has registered with a network at which the DT-AS is located, and if the M2M UE has registered with the network at which the DT-AS is located, sends the trigger message to the M2M UE, so as to implement that the DT-AS identifies the trigger message, so that the M2M UE establishes a connection with the third-party AS.

Referring to FIG. 7, FIG. 7 is a flowchart of a method for sending a trigger message according to an embodiment of the present invention. As shown in FIG. 7, the method includes the following steps:

Step 701: A device trigger application server DT-AS receives a trigger message sent by a third-party application server AS, where the trigger message includes at least an identifier of machine-to-machine communications user equipment M2M UE.

Specifically, referring to FIG. 5, when the third-party AS needs to access the M2M UE, the third-party AS triggers a trigger message and sends the trigger message to the DT-AS, and the DT-AS receives the trigger message sent by the third-party AS.

Step 702: Determine, according to the identifier of the M2M UE, whether the M2M UE has registered with the DT-AS.

Specifically, the trigger message carries the identifier of the M2M UE, and the DT-AS determines, according to the identifier of the M2M UE, whether the M2M UE has registered with a network at which the DT-AS is located.

Step 703: If the M2M UE has registered with the DT-AS, send the trigger message to the M2M UE corresponding to the identifier of the M2M UE.

Step 704: Receive a message that is sent by the M2M UE in response to the trigger message, and send, to the third-party AS, the message in response to the trigger message.

The third-party AS prestores the identifier of the M2M UE, the M2M UE is connected to a network at which the DT-AS is located, the DT-AS is a server in a 3GPP network, and the third-party AS is an M2M server outside the 3GPP network.

After the DT-AS receives the trigger message sent by the third-party AS, the method further includes:
identifying the trigger message according to an IP address of the third-party AS and/or a port number of the DT-AS that are/is preset in the trigger message; or
when a message is received by using a preset IP address and/or a preset port number, identifying, by the DT-AS, the message as the trigger message.

Specifically, when the third-party AS carries a specific identifier A in the trigger message, the DT-AS and the third-party AS agree, in advance, on that when the trigger message carries the specific identifier A, the DT-AS can identify the message as the trigger message.

The third-party AS may set the IP address of the third-party AS in the trigger message to 1.1.0.0, and the DT-AS and the third-party AS agree, in advance, on that when the IP address of the third-party AS is 1.1.0.0, the DT-AS can identify the message as the trigger message.

The third-party AS may set the port number of the DT-AS in the trigger message to 1, and the DT-AS and the third-party AS agree, in advance, on that when the port number of the DT-AS in the trigger message is 1, the DT-AS can identify the message as the trigger message.

The third-party AS may set an IP address and the port number of the DT-AS in the trigger message to 1.1.1.1 and 0 respectively, and when a trigger message is received by using the IP address 1.1.1.1 and the port number 0, the DT-AS can identify the message as the trigger message.

The third-party AS communicates with the DT-AS by using the diameter protocol or the HTTP protocol.
The present invention provides a method for sending a trigger message. When a third-party application server AS needs to establish a connection with machine-to-machine communications user equipment M2M UE, the third-party AS sends a trigger trigger message to a device trigger application server DT-AS, where the trigger message includes at least an identifier of the machine-to-machine communications user equipment M2M UE. The DT-AS determines, according to the identifier of the M2M UE, whether the M2M UE has registered with a network at which the DT-AS is located, and if the M2M UE has registered with the network at which the DT-AS is located, sends the trigger message to the M2M UE, so as to implement that the DT-AS identifies the trigger message, so that the M2M UE establishes a connection with the third-party AS.

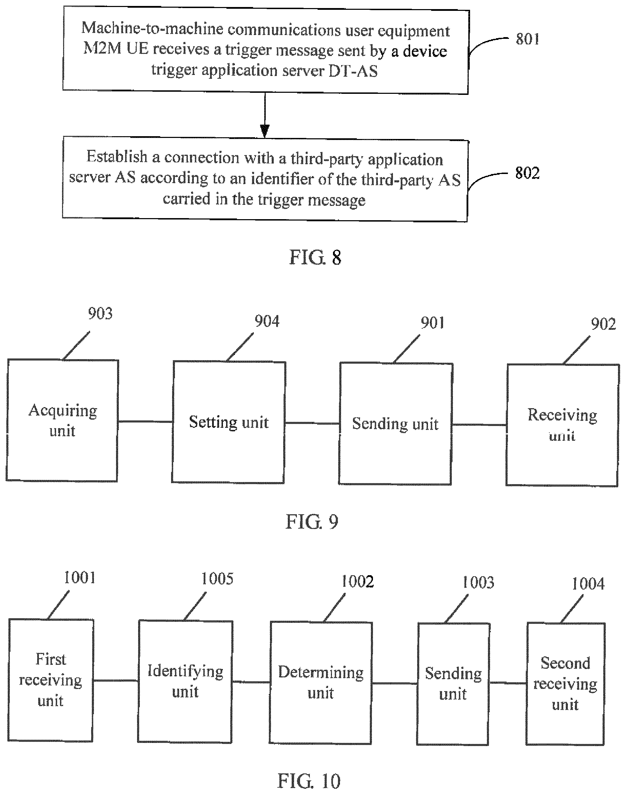

Referring to FIG. 8, FIG. 8 is a flowchart of a method for sending a trigger message according to an embodiment of the present invention. As shown in FIG. 8, the method includes the following steps:
Step 801: Machine-to-machine communications user equipment M2M UE receives a trigger message sent by a device trigger application server DT-AS.

Specifically, referring to FIG. 5, when the DT-AS sends a trigger message to the M2M UE, the M2M UE receives the trigger message.

Step 802: Establish a connection with a third-party application server AS according to an identifier of the third-party AS carried in the trigger message.

The trigger message includes at least an identifier of the machine-to-machine communications user equipment M2M UE.

The third-party AS prestores the identifier of the M2M UE, the M2M UE is connected to a network at which the DT-AS is located, the DT-AS is a server in a 3GPP network, and the third-party AS is an M2M server outside the 3GPP network.

The present invention provides a method for sending a trigger message. When a third-party application server AS needs to establish a connection with machine-to-machine communications user equipment M2M UE, the third-party AS sends a trigger trigger message to a device trigger application server DT-AS, where the trigger message includes at least an identifier of the machine-to-machine communications user equipment M2M UE. The DT-AS determines, according to the identifier of the M2M UE, whether the M2M UE has registered with a network at which the DT-AS is located, and if the M2M UE has registered with the network at which the DT-AS is located, sends the trigger message to the M2M UE, so as to implement that the DT-AS identifies the trigger message, so that the M2M UE establishes a connection with the third-party AS.

Referring to FIG. 9, FIG. 9 is a schematic structural diagram of an application server according to an embodiment of the present invention. As shown in FIG. 9, the application server includes a sending unit 901 and a receiving unit 902.

The sending unit 901 is configured to: when the third-party application server AS needs to establish a connection with machine-to-machine communications user equipment M2M UE, send a trigger trigger message to a device trigger application server DT-AS by the third-party AS.

The trigger message includes at least an identifier of the machine-to-machine communications user equipment M2M UE, so that the DT-AS determines, according to the identifier of the M2M UE, whether the M2M UE has registered with the DT-AS, and if the M2M UE has registered with the DT-AS, sends the trigger message to the M2M UE, receives a message that is sent by the M2M UE in response to the trigger message, and sends, to the third-party AS, the message in response to the trigger message.

Specifically, as shown in FIG. 5, when the third-party application server AS needs to establish a connection with the machine-to-machine communications user equipment M2M UE, the third-party AS sends a trigger trigger message to the device trigger application server DT-AS.

The receiving unit 902 is configured to receive ihe message that is sent by the DT-AS in response to the trigger message.

The third-party AS prestores the identifier of the M2M UE, the M2M UE is connected to a network at which the DT-AS is located, the DT-AS is a server in a 3GPP network, and the third-party AS is an M2M server outside the 3GPP network.

Specifically, when the M2M UE registers with the third-party AS, the third-party AS prestores the identifier of the M2M UE.

The application server further includes an acquiring unit 903 and a setting unit 904.

The acquiring unit 903 is specifically configured to:
acquire an IP address of the DT-AS and/or a port number of the DT-AS.

The setting unit 904 is specifically configured to:
set an IP address of the third-party AS and/or the port number of the DT-AS that are/is in the trigger message to a preset value or values, where the preset value or value is/are used by the DT-AS to identify the trigger message; or
set the IP address and/or the port number of the DT-AS that are/is in the trigger message to a preset IP address and/or a preset port number respectively, so that when a message is received by using the preset IP address and/or the preset port number, the DT-AS can identify the message as the trigger message.

Specifically, the third-party AS may set the IP address of the third-party AS in the trigger message to 1.1.0.0, and the DT-AS and the third-party AS agree, in advance, on that when the IP address of the third-party AS is 1.1.0.0, the DT-AS can identify the message as the trigger message.

The third-party AS may set the port number of the DT-AS in the trigger message to 1, and the DT-AS and the third-party AS agree, in advance, on that when the port number of the DT-AS in the trigger message is 1, the DT-AS can identify the message as the trigger message.

The third-party AS may set an IP address and the port number of the DT-AS in the trigger message to 1.1.1.1 and 0 respectively, and when a trigger message is received by using the IP address 1.1.1.1 and the port number 0, the DT-AS can identify the message as the trigger message.

The acquiring unit 903 is specifically configured to:
acquire the IP address and/or the port number of the DT-AS that are/is preset in the third-party AS; or
acquire an external IP address, of the M2M UE, preset in the third-party AS, and send the external IP address to a DNS so as to acquire, by means of parsing, the IP address of the DT-AS.

The third-party AS communicates with the DT-AS by using the diameter protocol or the HTTP protocol.

The present invention provides a device for sending a trigger message. When a third-party application server AS needs to establish a connection with machine-to-machine communications user equipment M2M UE, the third-party AS sends a trigger trigger message to a device trigger application server DT-AS, where the trigger message includes at least an identifier of the machine-to-machine communications user equipment M2M UE. The DT-AS determines, according to the identifier of the M2M UE, whether the M2M UE has registered with a network at which the DT-AS is located, and if the M2M UE has registered with the network at which the DT-AS is located, sends the trigger message to the M2M UE, so as to implement that the DT-AS identifies the trigger message, so that the M2M UE establishes a connection with the third-party AS.

Referring to FIG. 10, FIG. 10 is a schematic structural diagram of a device trigger application server according to an embodiment of the present invention. As shown in FIG. 10, the device trigger application server includes a first receiving unit 1001, a determining unit 1002, a sending unit 1003, and a second receiving unit 1004.

The first receiving unit 1001 is configured to receive a trigger message sent by a third-party application server AS, where the trigger message includes at least an identifier of machine-to-machine communications user equipment M2M UE.

Specifically, referring to FIG. 5, when the third-party AS needs to access the M2M UE, the third-party AS triggers a trigger message and sends the trigger message to the DT-AS, and the DT-AS receives the trigger message sent by the third-party AS.

The determining unit 1002 is configured to determine, according to the identifier of the M2M UE, whether the M2M UE has registered with the DT-AS.

Specifically, the trigger message carries the identifier of the M2M UE, and the DT-AS determines, according to the identifier of the M2M UE, whether the M2M UE has registered with a network at which the DT-AS is located.

The sending unit 1003 is configured to: if the M2M UE has registered with the DT-AS, send the trigger message to the M2M UE corresponding to the identifier of the M2M UE.

The second receiving unit 1004 is configured to receive a message that is sent by the M2M UE in response to the trigger message, and send, to the third-party AS, the message in response to the trigger message.

The third-party AS prestores the identifier of the M2M UE, the M2M UE is connected to a network at which the DT-AS is located, the DT-AS is a server in a 3GPP network, and the third-party AS is an M2M server outside the 3GPP network.

The device trigger application server further includes an identifying unit 1005, where the identifying unit 1005 is specifically configured to:
identify the trigger message according to a preset specific identifier carried in the trigger message; or
identify the trigger message according to an IP address of the third-party AS and/or a port number of the DT-AS that are/is preset in the trigger message; or
when a message is received by using a preset IP address and/or a preset port number, identify the message as the trigger message.

Specifically, when the third-party AS carries a specific identifier A in the trigger message, the DT-AS and the third-party AS agree, in advance, on that when the trigger message carries the specific identifier A, the DT-AS can identify the message as the trigger message.

The third-party AS may set the IP address of the third-party AS in the trigger message to 1.1.0.0, and the DT-AS and the third-party AS agree, in advance, on that when the IP address of the third-party AS is 1.1.0.0, the DT-AS can identify the message as the trigger message.

The third-party AS may set the port number of the DT-AS in the trigger message to 1, and the DT-AS and the third-party AS agree, in advance, on that when the port number of the DT-AS in the trigger message is 1, the DT-AS can identify the message as the trigger message.

The third-party AS may set an IP address and the port number of the DT-AS in the trigger message to 1.1.1.1 and 0 respectively, and when a trigger message is received by using the IP address 1.1.1.1 and the port number 0, the DT-AS can identify the message as the trigger message.

The third-party AS communicates with the DT-AS by using the diameter protocol or the HTTP protocol.

The present invention provides a device for sending a trigger message. When a third-party application server AS needs to establish a connection with machine-to-machine communications user equipment M2M UE, the third-party AS sends a trigger trigger message to a device trigger application server DT-AS, where the trigger message includes at least an identifier of the machine-to-machine communications user equipment M2M UE. The DT-AS determines, according to the identifier of the M2M UE, whether the M2M UE has registered with a network at which the DT-AS is located, and if the M2M UE has registered with the network at which the DT-AS is located, sends the trigger message to the M2M UE, so as to implement that the DT-AS identifies the trigger message, so that the M2M UE establishes a connection with the third-party AS.

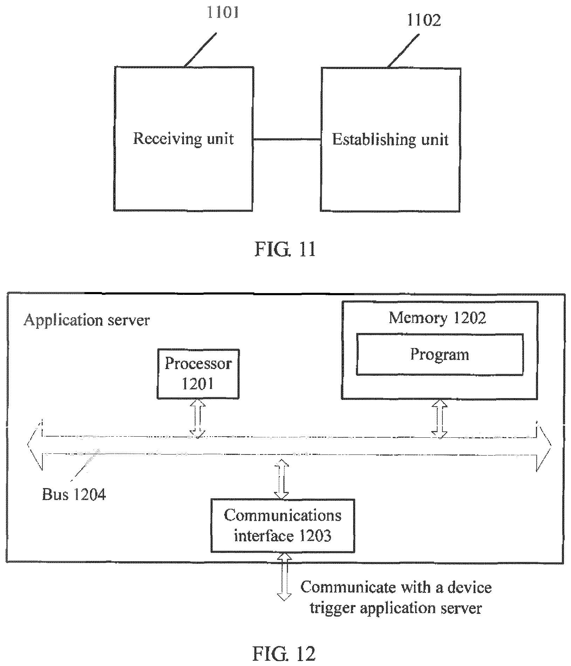

Referring to FIG. 11, FIG. 11 is a schematic structural diagram of an M2M UE according to an embodiment of the present invention. As shown in FIG. 11, the M2M UE includes a receiving unit 1101 and an establishing unit 1102.

The receiving unit 1101 is configured to receive a trigger message sent by a device trigger application server DT-AS.

Specifically, referring to FIG. 5, when the DT-AS sends a trigger message to the M2M UE, the M2M UE receives the trigger message.

The establishing unit 1102 is configured to establish a connection with a third-party application server AS according to an identifier of the third-party AS carried in the trigger message.

The trigger message includes at least an identifier of the machine-to-machine communications user equipment M2M UE.

The third-party AS prestores the identifier of the M2M UE, the M2M UE is connected to a network at which the DT-AS is located, the DT-AS is a server in a 3GPP network, and the third-party AS is an M2M server outside the 3GPP network.

The present invention provides a device for sending a trigger message. When a third-party application server AS needs to establish a connection with machine-to-machine communications user equipment M2M UE, the third-party AS sends a trigger trigger message to a device trigger application server DT-AS, where the trigger message includes at least an identifier of the machine-to-machine communications user equipment M2M UE. The DT-AS determines, according to the identifier of the M2M UE, whether the M2M UE has registered with a network at which the DT-AS is located, and if the M2M UE has registered with the network at which the DT-AS is located, sends the trigger message to the M2M UE, so as to implement that the DT-AS identifies the trigger message, so that the M2M UE establishes a connection with the third-party AS.

Referring to FIG. 12, FIG. 12 is a schematic structural dlagram of an application server according to an embodiment of the present invention. Referring to FIG. 12, FIG. 12 shows the application server 1200 provided in this embodiment of the present invention, and a specific embodiment of the present invention imposes no limitation on specific implementation of the application server. The application server 1200 includes:
a processor (processor) 1201, a communications interface (Communications Interface) 1202, a memory (memory) 1203, and a bus 1204.

The processor 1201, the communications interface 1202, and the memory 1203 complete mutual communication by using the bus 1204.

The communications interface 1202 is configured to communicate with a device trigger application server.

The processor 1201 is configured to execute a program.

Specifically, the program may include program code, where the program code includes a computer operation instruction.

The processor 1201 may be a central processing unit (central processing unit, CPU for short).

The memory 1203 is configured to store a program. The memory 1203 may be a volatile memory (volatile memory) such as a random access memory (random-access memory, RAM for short); or a nonvolatile memory (non-volatile memory) such as a flash memory (flash memory), a hard disk drive (hard disk drive, HDD for short), or a solid state drive (solid-state drive, SSD for short). The processor 1201 executes, according to a program instruction stored in the memory 1203, the following method:
when the third-party application server AS needs to establish a connection with machine-to-machine communications user equipment M2M UE, sending, by the third-party AS, a trigger trigger message to a device trigger application server DT-AS, where:
the trigger message includes at least an identifier of the machine-to-machine communications user equipment M2M UE, so that the DT-AS determines, according to the identifier of the M2M UE, whether the M2M UE has registered with the DT-AS, and if the M2M UE has registered with the DT-AS, sends the trigger message to the M2M UE, receives a message that is sent by the M2M UE in response to the trigger message, and sends, to the third-party AS, the message in response to the trigger message; and
receiving the message that is sent by the DT-AS in response to the trigger message; where:
   the M2M UE is connected to a network at which the DT-AS is located, the DT-AS is a server in a 3GPP network, and the third-party AS is an M2M server outside the 3GPP network.

Before the sending, by the third-party AS, a trigger trigger message to the DT-AS, the method further includes:
acquiring, by the third-party AS, an IP address of the DT-AS and/or a port number of the DT-AS; and
setting an IP address of the third-party AS and/or the port number of the DT-AS that are/is in the trigger message to a preset value or values, where the preset value or value is/are used by the DT-AS to identify the trigger message; or
setting the IP address and/or the port number of the DT-AS that are/is in the trigger message to a preset IP address and/or a preset port number respectively, so that when a message is received by using the preset IP address and/or the preset port number, the DT-AS can identify the message as the trigger message.

The acquiring, by the third-party AS, an IP address of the DT-AS and/or a port number of the DT-AS includes:
acquiring the IP address and/or the port number of the DT-AS that are/is preset in the third-party AS; or
acquiring an external IP address, of the M2M UE, preset in the third-party AS, and sending the external IP address to a DNS so as to acquire, by means of parsing, the IP address of the DT-AS; or
acquiring an IP address of the DT-AS that is preset in the third-party AS, and sending the IP address of the DT-AS to a DNS so as to acquire, by means of parsing, the IP address of the DT-AS.

The third-party AS communicates with the DT-AS by using the diameter protocol or the HTTP protocol.

The present invention provides a method for sending a trigger message. When a third-party application server AS needs to establish a connection with machine-to-machine communications user equipment M2M UE, the third-party AS sends a trigger trigger message to a device trigger application server DT-AS, where the trigger message includes at least an identifier of the machine-to-machine communications user equipment M2M UE. The DT-AS determines, according to the identifier of the M2M UE, whether the M2M UE has registered with a network at which the DT-AS is located, and if the M2M UE has registered with the network at which the DT-AS is located, sends the trigger message to the M2M UE, so as to implement that the DT-AS identifies the trigger message, so that the M2M UE establishes a connection with the third-party AS.

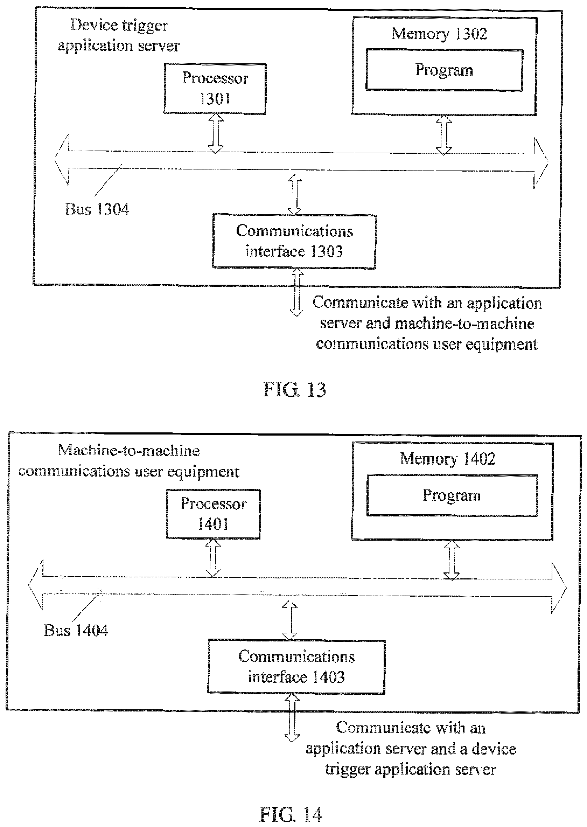

Referring to FIG. 13, FIG. 13 is a schematic structural diagram of a device trigger application server according to an embodiment of the present invention. Referring to FIG. 13, FIG. 13 shows the device trigger application server 1300 provided in this embodiment of the present invention, and a specific embodiment of the present invention imposes no limitation on specific implementation of the device trigger application server. The device trigger application server 1300 includes:
a processor (processor) 1301, a communications interface (Communications Interface) 1302, a memory (memory) 1303, and a bus 1304.

The processor 1301, the communications interface 1302, and the memory 1303 complete mutual communications by using the bus 1304.

The communications interface 1302 is configured to communicate with an application server and machine-to-machine communications user equipment.

The processor 1301 is configured to execute a program.

Specifically, the program may include program code, where the program code includes a computer operation instruction.

The processor 1301 may be a central processing unit (central processing unit, CPU for short).

The memory 1303 is configured to store a program. The memory 1303 may be a volatile memory (volatile memory) such as a random access memory (random-access memory, RAM for short); or a nonvolatile memory (non-volatile memory) such as a flash memory (flash memory), a hard disk drive (hard disk drive, HDD for short), or a solid state drive (solid-state drive, SSD for short). The processor 1301 executes, according to a program instruction stored in the memory 1303, the following method:
receiving a trigger message sent by a third-party application server AS, where the trigger message includes at least an identifier of machine-to-machine communications user equipment M2M UE;
determining, according to the identifier of the M2M UE, whether the M2M UE has registered with the DT-AS;
if the M2M UE has registered with the DT-AS, sending the trigger message to the M2M UE corresponding to the identifier of the M2M UE; and
receiving a message that is sent by the M2M UE in response to the trigger message, and sending, to the third-party AS, the message in response to the trigger message.

The trigger message includes at least an identifier of the machine-to-machine communications user equipment M2M UE.

The M2M UE is connected to a network at which the DT-AS is located, the DT-AS is a server in a 3GPP network, and the third-party AS is an M2M server outside the 3GPP network.

After the receiving, by a DT-AS, a trigger message sent by the third-party AS, the method further includes:
identifying the trigger message according to a preset specific identifier carried in the trigger message; or
identifying the trigger message according to an IP address of the third-party AS and/or a port number of the DT-AS that are/is preset in the trigger message; or
when a message is received by using a preset IP address and/or a preset port number, identifying, by the DT-AS, the message as the trigger message.

The third-party AS communicates with the DT-AS by using the diameter protocol or the HTTP protocol.

The present invention provides a device trigger application server. When a third-party application server AS needs to establish a connection with machine-to-machine communications user equipment M2M UE, the third-party AS sends a trigger trigger message to the device trigger application server DT-AS, where the trigger message includes at least an identifier of the machine-to-machine communications user equipment M2M UE. The DT-AS determines, according to the identifier of the M2M UE, whether the M2M UE has registered with a network at which the DT-AS is located, and if the M2M UE has registered with the network at which the DT-AS is located, sends the trigger message to the M2M UE, so as to implement that the DT-AS identifies the trigger message, so that the M2M UE establishes a connection with the third-party AS.

Referring to FIG. 14, FIG. 14 is a schematic structural diagram of machine-to-machine communications user equipment according to an embodiment of the present invention. Referring to FIG. 14, FIG. 14 shows the machine-to-machine communications user equipment 1400 provided in this embodiment of the present invention, and a specific embodiment of the present invention imposes no limitation on specific implementation of the machine-to-machine communications user equipment. The machine-to-machine communications user equipment 1400 includes:
a processor (processor) 1401, a communications interface (Communications Interface) 1402, a memory (memory) 1403, and a bus 1404.

The processor 1401, the communications interface 1402, and the memory 1403 complete mutual communications by using the bus 1404.

The communications interface 1402 is configured to communicate with an application server and a device trigger application server.

The processor 1401 is configured to execute a program.

Specifically, the program may include program code, where the program code includes a computer operation instruction.

The processor 1401 may be a central processing unit (central processing unit, CPU for short).

The memory 1403 is configured to store a program. The memory 1403 may be a volatile memory (volatile memory) such as a random access memory (random-access memory, RAM for short); or a nonvolatile memory (non-volatile memory) such as a flash memory (flash memory), a hard disk drive (hard disk drive, HDD for short), or a solid state drive (solid-state drive, SSD for short). The processor 1401 executes, according to a program instruction stored in the memory 1403, the following method:
receiving a trigger message sent by the device trigger application server DT-AS; and
establishing a connection with a third-party application server AS according to an identifier of the third-party AS carried in the trigger message.

The trigger message includes at least an identifier of the machine-to-machine communications user equipment M2M UE.

The third-party AS prestores the identifier of the M2M UE, the M2M UE is connected to a network at which the DT-AS is located, the DT-AS is a server in a 3GPP network, and the third-party AS is an M2M server outside the 3GPP network.

The present invention provides machine-to-machine communications user equipment. When a third-party application server AS needs to establish a connection with the machine-to-machine communications user equipment M2M UE, the third-party AS sends a trigger trigger message to a device trigger application server DT-AS, where the trigger message includes at least an identifier of the machine-to-machine communications user equipment M2M UE. The DT-AS determines, according to the identifier of the M2M UE, whether the M2M UE has registered with a network at which the DT-AS is located, and if the M2M UE has registered with the network at which the DT-AS is located, sends the trigger message to the M2M UE, so as to implement that the DT-AS identifies the trigger message, so that the M2M UE establishes a connection with the third-party AS.

## Claims

1. A method for sending a trigger message, wherein the method comprises:
when a third-party application server, AS, needs to establish a connection with machine-to-machine communications user equipment, M2M UE, sending (S601), by the third-party AS, a trigger message to a device trigger application server, DT-AS,
wherein:
the trigger message comprises at least an identifier of the machine-to-machine communications user equipment M2M UE, so that the DT-AS determines, according to the identifier of the M2M UE, whether the M2M UE has registered with the DT-AS, and if the M2M UE has registered with the DT-AS, the DT-AS sends the trigger message to the M2M UE, receives a message that is sent by the M2M UE in response to the trigger message, and sends, to the third-party AS, the message in response to the trigger message; and
receiving (S602), by the third-party AS, the message that is sent by the DT-AS in response to the trigger message; wherein:
the M2M UE is connected to a network at which the DT-AS is located, the DT-AS is a server in a 3GPP network, and the third-party AS is an M2M server outside the 3GPP network, wherein before the sending, by the third-party AS, a trigger message to the DT-AS, the method further comprises:
acquiring, by the third-party AS, an IP address of the DT-AS and/or a port number of the DT-AS; and
setting an IP address of the third-party AS and/or the port number of the DT-AS that are/is in the trigger message to a preset value or values, wherein the preset value or values is/are used by the DT-AS to identify the trigger message; or
setting the IP address and/or the port number of the DT-AS that are/is in the trigger message to a preset IP address and/or a preset port number respectively, said preset IP address and/or preset port number having been agreed in advance by the DT-AS and the third-party AS, so that when a message is received by using the preset IP address and/or the preset port number, the DT-AS can identify the message as the trigger message.

2. The method according to claim 1, wherein the acquiring, by the third-party AS, an IP address of the DT-AS and/or a port number of the DT-AS comprises:
acquiring the IP address and/or the port number of the DT-AS that are/is preset in the third-party AS; or
acquiring an external IP address, of the M2M UE, preset in the third-party AS, and sending the external IP address to a DNS so as to acquire, by means of parsing, the IP address of the DT-AS.

3. The method according to claim 1 or 2, wherein:
the third-party AS communicates with the DT-AS by using the diameter protocol or the HTTP protocol.

4. A method for sending a trigger message, wherein the method comprises:
receiving, by a device trigger application server, DT-AS, a trigger message sent by a third-party application server, AS, wherein the trigger message comprises at least an identifier of machine-to-machine communications user equipment, M2M UE;
determining, according to the identifier of the M2M UE, whether the M2M UE has registered with the DT-AS;
if the M2M UE has registered with the DT-AS, sending the trigger message to the M2M UE corresponding to the identifier of the M2M UE; and
receiving a message that is sent by the M2M UE in response to the trigger message, and sending, to the third-party AS, the message in response to the trigger message,
wherein:
the M2M UE is connected to a network at which the DT-AS is located, the DT-AS is a server in a 3GPP network, and the third-party AS is an M2M server outside the 3GPP network, wherein after the receiving, by a DT-AS, a trigger message sent by the third-party AS, the method further comprises:
identifying the trigger message according to an IP address of the third-party AS and/or a port number of the DT-AS that are/is preset in the trigger message; or
when a message is received by using a preset IP address and/or a preset port number, said preset IP address and/or preset port number having been agreed in advance by the DT-AS and the third-party AS, identifying, by the DT-AS, the message as the trigger message.

5. The method according to claim 4, wherein the third-party AS communicates with the DT-AS by using the diameter protocol or the HTTP protocol.

6. An application server, wherein the application server is a third-party application server AS, comprising:
a sending unit, configured to: when the third-party application server, AS, needs to establish a connection with machine-to-machine communications user equipment, M2M UE, send a trigger message to a device trigger application server, DT-AS, by the third-party AS, wherein:
the trigger message comprises at least an identifier of the machine-to-machine communications user equipment, M2M UE, so that the DT-AS determines, according to the identifier of the M2M UE, whether the M2M UE has registered with the DT-AS, and if the M2M UE has registered with the DT-AS, sends the trigger message to the M2M UE, receives a message that is sent by the M2M UE in response to the trigger message, and sends, to the third-party AS, the message in response to the trigger message; and
a receiving unit, configured to receive the message that is sent by the DT-AS in response to the trigger message; wherein:
the M2M UE is connected to a network at which the DT-AS is located, the DT-AS is a server in a 3GPP network, and the third-party AS is an M2M server outside the 3GPP network, wherein the application server further comprises an acquiring unit and a setting unit;
the acquiring unit is specifically configured to:
acquire an IP address of the DT-AS and/or a port number of the DT-AS; and
the setting unit is specifically configured to:
set an IP address of the third-party AS and/or the port number of the DT-AS that are/is in the trigger message to a preset value or values, wherein the DT-AS is configured to identify the trigger message using the preset value or values ; or
set the IP address and/or the port number of the DT-AS that are/is in the trigger message to a preset IP address and/or a preset port number respectively, said preset IP address and/or preset port number having been agreed in advance by the DT-AS and the third-party AS, so that when a message is received by using the preset IP address and/or the preset port number, the DT-AS can identify the message as the trigger message.

7. The application server according to claim 6, wherein the acquiring unit is specifically configured to:
acquire the IP address and/or the port number of the DT-AS that are/is preset in the third-party AS; or
acquire an external IP address, of the M2M UE, preset in the third-party AS, and send the external IP address to a DNS so as to acquire, by means of parsing, the IP address of the DT-AS.

8. The application server according to claim 6 or 7, wherein the third-party AS communicates with the DT-AS by using the diameter protocol or the HTTP protocol.

9. A device trigger application server, DT-AS, wherein the device trigger application server comprises:
a first receiving unit, configured to receive a trigger message sent by a third-party application server, AS, wherein the trigger message comprises at least an identifier of machine-to-machine communications user equipment, M2M UE;
a determining unit, configured to determine, according to the identifier of the M2M UE, whether the M2M UE has registered with the DT-AS;
a sending unit, configured to: if the M2M UE has registered with the DT-AS, send the trigger message to the M2M UE corresponding to the identifier of the M2M UE; and
a second receiving unit, configured to receive a message that is sent by the M2M UE in response to the trigger message, and send, to the third-party AS, the message in response to the trigger message, wherein:
the trigger message comprises at least the identifier of the machine-to-machine communications user equipment M2M UE; and
the M2M UE is connected to a network at which the DT-AS is located, the DT-AS is a server in a 3GPP network, and the third-party AS is an M2M server outside the 3GPP network, wherein the device trigger application server further comprises an identifying unit, and the identifying unit is specifically configured to:
identify the trigger message according to an IP address of the third-party AS and/or a port number of the DT-AS that are/is preset in the trigger message; or
when a message is received by using a preset IP address and/or a preset port number, said preset IP address and/or preset port number having been agreed in advance by the DT-AS and the third-party AS, identify the message as the trigger message.

10. The device trigger application server according to claim 9, wherein the third-party AS communicates with the DT-AS by using the diameter protocol or the HTTP protocol.

## Patentansprüche

1. Verfahren zum Senden einer Auslösernachricht, wobei das Verfahren Folgendes umfasst:
wenn ein Drittanwendungsserver, Dritt-AS, eine Verbindung zu einer Maschine-zu-Maschine-Kommunikationsbenutzerausrüstung, M2M-UE, herstellen muss, Senden (S601), durch den Dritt-AS, einer Auslösernachricht an einen Vorrichtungsauslöser-Anwendungsserver, DT-AS, wobei:
die Auslösernachricht zumindest einen Identifikator der Maschine-zu-Maschine-Kommunikationsbenutzerausrüstung, M2M-UE, umfasst, sodass der DT-AS gemäß dem Identifikator der M2M-UE bestimmt, ob sich die M2M-UE beim DT-AS registriert hat, und wenn sich die M2M-UE beim DT-AS registriert hat, sendet der DT-AS die Auslösernachricht an die M2M-UE, empfängt eine Nachricht, die durch die M2M-UE als Reaktion auf die Auslösernachricht gesendet wurde, und sendet, an den Dritt-AS, die Nachricht als Reaktion auf die Auslösernachricht; und
Empfangen (S602), durch den Dritt-AS, der Nachricht, die durch den DT-AS als Reaktion auf die Auslösernachricht gesendet wird, wobei:
die M2M-UE mit einem Netzwerk verbunden ist, an dem sich der DT-AS befindet, der DT-AS ein Server in einem 3GPP-Netzwerk ist und der Dritt-AS ein M2M-Server außerhalb des 3GPP-Netzwerks ist, wobei, vor dem Senden, durch den Dritt-AS, einer Auslösernachricht an den DT-AS, das Verfahren ferner Folgendes umfasst:
Erfassen, durch den Dritt-AS, einer IP-Adresse des DT-AS und/oder einer Port-Nummer des DT-AS; und
Festlegen einer IP-Adresse des Dritt-AS und/oder der Port-Nummer des DT-AS, die in der Auslösernachricht sind/ist, auf einen vorgegebenen Wert oder vorgegebene Werte, wobei der vorgegebene Wert oder die vorgegebenen Werte durch den DT-AS zum Identifizieren der Auslösernachricht verwendet wird/werden; oder
Festlegen der IP-Adresse und/oder der Port-Nummer des DT-AS, die in der Auslösernachricht sind/ist, auf eine vorgegebene IP-Adresse bzw. eine vorgegebene Port-Nummer, wobei die vorgegebene IP-Adresse und/oder die vorgegebene Port-Nummer vorab durch den DT-AS und den Dritt-AS vereinbart wurden, sodass, wenn eine Nachricht durch Verwenden der vorgegebenen IP-Adresse und/oder der vorgegebenen Port-Nummer empfangen wird, der DT-AS die Nachricht als die Auslösernachricht identifizieren kann.

2. Verfahren nach Anspruch 1, wobei das Erfassen, durch den Dritt-AS, einer IP-Adresse des DT-AS und/oder einer Port-Nummer des DT-AS Folgendes umfasst:
Erfassen der IP-Adresse und/oder der Port-Nummer des DT-AS, die im Dritt-AS vorgegeben sind/ist; oder
Erfassen einer externen IP-Adresse der M2M-UE, die im Dritt-AS vorgegeben ist, und Senden der externen IP-Adresse an ein DNS zum Erfassen, mittels Parsen, der IP-Adresse des DT-AS.

3. Verfahren nach Anspruch 1 oder 2, wobei:
der Dritt-AS mit dem DT-AS durch Verwenden des Diameter-Protokolls oder des HTTP-Protokolls kommuniziert.

4. Verfahren zum Senden einer Auslösernachricht, wobei das Verfahren Folgendes umfasst:
Empfangen, durch einen Vorrichtungsauslöser-Anwendungsserver, DT-AS, einer Auslösernachricht, die durch einen Drittanwendungsserver, Dritt-AS, gesendet wird, wobei die Auslösernachricht zumindest einen Identifikator einer Maschine-zu-Maschine-Kommunikationsbenutzerausrüstung, M2M-UE, umfasst;
Bestimmen, gemäß dem Identifikator der M2M-UE, ob sich die M2M-UE beim DT-AS registriert hat,
wenn sich die M2M-UE beim DT-AS registriert hat, Senden der Auslösernachricht an die M2M-UE entsprechend dem Identifikator der M2M-UE; und
Empfangen einer Nachricht, die durch die M2M-UE als Reaktion auf die Auslösernachricht gesendet wird, und Senden, an den Dritt-AS, der Nachricht als Reaktion auf die Auslösernachricht, wobei:
die M2M-UE mit einem Netzwerk verbunden ist, an dem sich der DT-AS befindet, der DT-AS ein Server in einem 3GPP-Netzwerk ist und der Dritt-AS ein M2M-Server außerhalb des 3GPP-Netzwerks ist, wobei, nach dem Empfangen, durch einen DT-AS, einer Auslösernachricht, die durch den Dritt-AS gesendet wird, das Verfahren ferner Folgendes umfasst:
Identifizieren der Auslösernachricht gemäß einer IP-Adresse des Dritt-AS und/oder einer Port-Nummer des DT-AS, die in der Auslösernachricht vorgegeben sind/ist; oder
wenn eine Nachricht durch Verwenden einer vorgegebenen IP-Adresse und/oder einer vorgegebenen Port-Nummer empfangen wird, wobei die vorgegebene IP-Adresse und/oder die vorgegebene Port-Nummer vorab durch den DT-AS und den Dritt-AS vereinbart wurden, Identifizieren, durch den DT-AS, der Nachricht als die Auslösernachricht.

5. Verfahren nach Anspruch 4, wobei der Dritt-AS mit dem DT-AS durch Verwenden des Diameter-Protokolls oder des HTTP-Protokolls kommuniziert.

6. Anwendungsserver, wobei der Anwendungsserver ein Drittanwendungsserver, Dritt-AS, ist, umfassend:
eine Sendeeinheit, die ausgelegt ist zum: wenn der Drittanwendungsserver, Dritt-AS, eine Verbindung zu einer Maschine-zu-Maschine-Kommunikationsbenutzerausrüstung, M2M-UE, herstellen muss, Senden einer Auslösernachricht an einen Vorrichtungsauslöser-Anwendungsserver, DT-AS, durch den Dritt-AS, wobei:
die Auslösernachricht zumindest einen Identifikator der Maschine-zu-Maschine-Kommunikationsbenutzerausrüstung, M2M-UE, umfasst, sodass der DT-AS gemäß dem Identifikator der M2M-UE bestimmt, ob sich die M2M-UE beim DT-AS registriert hat, und wenn sich die M2M-UE beim DT-AS registriert hat, die Auslösernachricht an die M2M-UE sendet, eine Nachricht empfängt, die durch die M2M-UE als Reaktion auf die Auslösernachricht gesendet wurde, und, an den Dritt-AS, die Nachricht als Reaktion auf die Auslösernachricht sendet; und
eine Empfangseinheit, die zum Empfangen der Nachricht, die durch den DT-AS als Reaktion auf die Auslösernachricht gesendet wird, ausgelegt ist, wobei:
die M2M-UE mit einem Netzwerk verbunden ist, an dem sich der DT-AS befindet, der DT-AS ein Server in einem 3GPP-Netzwerk ist und der Dritt-AS ein M2M-Server außerhalb des 3GPP-Netzwerks ist, wobei der Anwendungsserver ferner eine Erfassungseinheit und eine Festlegungseinheit umfasst;
die Erfassungseinheit insbesondere ausgelegt ist zum:
Erfassen einer IP-Adresse des DT-AS und/oder einer Port-Nummer des DT-AS; und
die Festlegungseinheit insbesondere ausgelegt ist zum:
Festlegen einer IP-Adresse des Dritt-AS und/oder der Port-Nummer des DT-AS, die in der Auslösernachricht sind/ist, auf einen vorgegebenen Wert oder vorgegebene Werte, wobei der DT-AS zum Identifizieren der Auslösernachricht unter Verwendung des vorgegebenen Werts oder der vorgegebenen Werte ausgelegt ist; oder
Festlegen der IP-Adresse und/oder der Port-Nummer des DT-AS, die in der Auslösernachricht sind/ist, auf eine vorgegebene IP-Adresse bzw. eine vorgegebene Port-Nummer, wobei die vorgegebene IP-Adresse und/oder die vorgegebene Port-Nummer vorab durch den DT-AS und den Dritt-AS vereinbart wurden, sodass, wenn eine Nachricht durch Verwenden der vorgegebenen IP-Adresse und/oder der vorgegebenen Port-Nummer empfangen wird, der DT-AS die Nachricht als die Auslösernachricht identifizieren kann.

7. Anwendungsserver nach Anspruch 6, wobei die Erfassungseinheit insbesondere ausgelegt ist zum:
Erfassen der IP-Adresse und/oder der Port-Nummer des DT-AS, die im Dritt-AS vorgegeben sind/ist; oder
Erfassen einer externen IP-Adresse der M2M-UE, die im Dritt-AS vorgegeben ist, und Senden der externen IP-Adresse an ein DNS zum Erfassen, mittels Parsen, der IP-Adresse des DT-AS.

8. Anwendungsserver nach Anspruch 6 oder 7, wobei der Dritt-AS mit dem DT-AS durch Verwenden des Diameter-Protokolls oder des HTTP-Protokolls kommuniziert.

9. Vorrichtungsauslöser-Anwendungsserver, DT-AS, wobei der Vorrichtungsauslöser-Anwendungsserver Folgendes umfasst:
eine erste Empfangseinheit, die zum Empfangen einer Auslösernachricht, die durch einen Drittanwendungsserver, Dritt-AS, gesendet wird, ausgelegt ist, wobei die Auslösernachricht zumindest einen Identifikator einer Maschine-zu-Maschine-Kommunikationsbenutzerausrüstung, M2M-UE, umfasst;
eine Bestimmungseinheit, die zum Bestimmen, gemäß dem Identifikator der M2M-UE, ob sich die M2M-UE beim DT-AS registriert hat, ausgelegt ist;
eine Sendeeinheit, die ausgelegt ist zum: wenn sich die M2M-UE beim DT-AS registriert hat, Senden der Auslösernachricht an die M2M-UE entsprechend dem Identifikator der M2M-UE; und
eine zweite Empfangseinheit, die zum Empfangen einer Nachricht, die durch die M2M-UE als Reaktion auf die Auslösernachricht gesendet wird, und Senden, an den Dritt-AS, der Nachricht als Reaktion auf die Auslösernachricht ausgelegt ist, wobei:
die Auslösernachricht zumindest den Identifikator der Maschine-zu-Maschine-Kommunikationsbenutzerausrüstung, M2M-UE, umfasst und
die M2M-UE mit einem Netzwerk verbunden ist, an dem sich der DT-AS befindet, der DT-AS ein Server in einem 3GPP-Netzwerk ist und der Dritt-AS ein M2M-Server außerhalb des 3GPP-Netzwerks ist, wobei der Vorrichtungsauslöser-Anwendungsserver ferner eine Identifizierungseinheit umfasst und die Identifizierungseinheit insbesondere ausgelegt ist zum:
Identifizieren der Auslösernachricht gemäß einer IP-Adresse des Dritt-AS und/oder einer Port-Nummer des DT-AS, die in der Auslösernachricht vorgegeben sind/ist; oder
wenn eine Nachricht durch Verwenden einer vorgegebenen IP-Adresse und/oder einer vorgegebenen Port-Nummer empfangen wird, wobei die vorgegebene IP-Adresse und/oder die vorgegebene Port-Nummer vorab durch den DT-AS und den Dritt-AS vereinbart wurden, Identifizieren der Nachricht als die Auslösernachricht.

10. Vorrichtungsauslöser-Anwendungsserver nach Anspruch 9, wobei der Dritt-AS mit dem DT-AS durch Verwenden des Diameter-Protokolls oder des HTTP-Protokolls kommuniziert.

## Revendications

1. Procédé pour envoyer un message de déclenchement, le procédé comprenant :
lorsqu'un serveur d'application, AS, tiers a besoin d'établir une connexion avec un équipement utilisateur de communications de machine à machine, M2M UE, l'envoi (S601), par l'AS tiers, d'un message de déclenchement à un serveur d'application de déclenchement de dispositif, DT-AS,
le message de déclenchement comprenant au moins un identifiant de l'équipement utilisateur de communications de machine à machine M2M UE, de sorte que le DT-AS détermine, en fonction de l'identifiant du M2M UE, si le M2M UE s'est enregistré auprès du DT-AS, et si le M2M UE s'est enregistré auprès du DT-AS, le DT-AS envoie le message de déclenchement au M2M UE, reçoit un message qui est envoyé par le M2M UE en réponse au message de déclenchement, et envoie, à l'AS tiers, le message en réponse au message de déclenchement ; et
la réception (S602), par l'AS tiers, du message qui est envoyé par le DT-AS en réponse au message de déclenchement ;
le M2M UE étant connecté à un réseau sur lequel le DT-AS est situé, le DT-AS étant un serveur dans un réseau 3GPP, et l'AS tiers étant un serveur M2M en dehors du réseau 3GPP, avant l'envoi, par l'AS tiers, d'un message de déclenchement au DT-AS, le procédé comprenant en outre :
l'acquisition, par l'AS tiers, d'une adresse IP du DT-AS et/ou d'un numéro de port du DT-AS ; et
la définition d'une adresse IP de l'AS tiers et/ou du numéro de port du DT-AS qui sont/est dans le message de déclenchement à une ou des valeurs prédéfinies, la ou les valeurs prédéfinies étant utilisées par le DT-AS pour identifier le message de déclenchement ; ou
la définition de l'adresse IP et/ou du numéro de port du DT-AS qui sont/est dans le message de déclenchement à une adresse IP prédéfinie et/ou un numéro de port prédéfini respectivement, ladite adresse IP prédéfinie et/ou ledit numéro de port prédéfini ayant été convenus à l'avance par le DT-AS et l'AS tiers, de sorte que lorsqu'un message est reçu en utilisant l'adresse IP prédéfinie et/ou le numéro de port prédéfini, le DT-AS peut identifier le message comme étant le message de déclenchement.

2. Procédé selon la revendication 1, l'acquisition, par l'AS tiers, d'une adresse IP du DT-AS et/ou d'un numéro de port du DT-AS comprenant :
l'acquisition de l'adresse IP et/ou du numéro de port du DT-AS qui sont/est prédéfini(s) dans l'AS tiers, ou
l'acquisition d'une adresse IP externe, du M2M UE, prédéfinie dans l'AS tiers, et l'envoi de l'adresse IP externe à un DNS afin d'acquérir, par analyse, l'adresse IP du DT-AS.

3. Procédé selon la revendication 1 ou 2,
l'AS tiers communiquant avec le DT-AS en utilisant le protocole Diameter ou le protocole HTTP.

4. Procédé pour envoyer un message de déclenchement, le procédé comprenant :
la réception, par un serveur d'application de déclenchement de dispositif, DT-AS, d'un message de déclenchement envoyé par un serveur d'application, AS, tiers, le message de déclenchement comprenant au moins un identifiant d'un équipement utilisateur de communications de machine à machine, M2M UE ;
la détermination, en fonction de l'identifiant du M2M UE, si le M2M UE s'est enregistré auprès du DT-AS ;
si le M2M UE s'est enregistré auprès du DT-AS, l'envoi du message de déclenchement au M2M UE correspondant à l'identifiant du M2M UE ; et
la réception d'un message qui est envoyé par le M2M UE en réponse au message de déclenchement, et l'envoi, à l'AS tiers, du message en réponse au message de déclenchement,
le M2M UE étant connecté à un réseau sur lequel le DT-AS est situé, le DT-AS étant un serveur dans un réseau 3GPP, et l'AS tiers étant un serveur M2M en dehors du réseau 3GPP, après la réception, par un DT-AS, d'un message de déclenchement envoyé par l'AS tiers, le procédé comprenant en outre :
l'identification du message de déclenchement en fonction d'une adresse IP de l'AS tiers et/ou d'un numéro de port du DT-AS qui sont/est prédéfini(s) dans le message de déclenchement ; ou
lorsqu'un message est reçu en utilisant une adresse IP prédéfinie et/ou un numéro de port prédéfini, ladite adresse IP prédéfinie et/ou ledit numéro de port prédéfini ayant été convenus à l'avance par le DT-AS et l'AS tiers,
l'identification, par le DT-AS, du message comme étant le message de déclenchement.

5. Procédé selon la revendication 4, l'AS tiers communiquant avec le DT-AS en utilisant le protocole Diameter ou le protocole HTTP.

6. Serveur d'application, le serveur d'application étant un serveur d'application, AS, tiers comprenant :
une unité d'envoi, configurée pour : lorsque le serveur d'application tiers, AS, a besoin d'établir une connexion avec un équipement utilisateur de communications de machine à machine, M2M UE, envoyer un message de déclenchement à un serveur d'application de déclenchement de dispositif, DT-AS, par l'AS tiers,
le message de déclenchement comprenant au moins un identifiant de l'équipement utilisateur de communications de machine à machine, M2M UE, de sorte que le DT-AS détermine, en fonction de l'identifiant du M2M UE, si le M2M UE s'est enregistré auprès du DT-AS, et si le M2M UE s'est enregistré auprès du DT-AS, envoie le message de déclenchement au M2M UE, reçoit un message qui est envoyé par le M2M UE en réponse au message de déclenchement, et envoie, à l'AS tiers, le message en réponse au message de déclenchement ; et
une unité de réception, configurée pour recevoir le message qui est envoyé par le DT-AS en réponse au message de déclenchement ;
le M2M UE étant connecté à un réseau sur lequel le DT-AS est situé, le DT-AS étant un serveur dans un réseau 3GPP, et l'AS tiers étant un serveur M2M en dehors du réseau 3GPP, le serveur d'application comprenant en outre une unité d'acquisition et une unité de réglage ;
l'unité d'acquisition étant spécifiquement configurée pour :
acquérir une adresse IP du DT-AS et/ou un numéro de port du DT-AS ; et
l'unité de réglage étant spécifiquement configurée pour :
définir une adresse IP de l'AS tiers et/ou le numéro de port du DT-AS qui sont/est dans le message de déclenchement à une ou des valeurs prédéfinies, le DT-AS étant configuré pour identifier le message de déclenchement en utilisant la ou les valeurs prédéfinies ; ou
définir l'adresse IP et/ou le numéro de port du DT-AS qui sont/est dans le message de déclenchement à une adresse IP prédéfinie et/ou un numéro de port prédéfini respectivement, ladite adresse IP prédéfinie et/ou ledit numéro de port prédéfini ayant été convenus à l'avance par le DT-AS et l'AS tiers, de sorte que lorsqu'un message est reçu en utilisant l'adresse IP prédéfinie et/ou le numéro de port prédéfini, le DT-AS peut identifier le message comme étant le message de déclenchement.

7. Serveur d'application selon la revendication 6, l'unité d'acquisition étant spécifiquement configurée pour :
acquérir l'adresse IP et/ou le numéro de port du DT-AS qui sont/est prédéfini(s) dans l'AS tiers ; ou
acquérir une adresse IP externe, du M2M UE, prédéfinie dans l'AS tiers, et envoyer l'adresse IP externe à un DNS afin d'acquérir, par analyse, l'adresse IP du DT-AS.

8. Serveur d'application selon la revendication 6 ou 7, l'AS tiers communiquant avec le DT-AS en utilisant le protocole Diameter ou le protocole HTTP.

9. Serveur d'application de déclenchement de dispositif, DT-AS, le serveur d'application de déclenchement de dispositif comprenant :
une première unité de réception, configurée pour recevoir un message de déclenchement envoyé par un serveur d'application, AS, tiers, le message de déclenchement comprenant au moins un identifiant d'un équipement utilisateur de communications de machine à machine, M2M UE ;
une unité de détermination, configurée pour déterminer, en fonction de l'identifiant du M2M UE, si le M2M UE s'est enregistré auprès du DT-AS ;
une unité d'envoi, configurée pour : si le M2M UE s'est enregistré auprès du DT-AS, envoyer le message de déclenchement au M2M UE correspondant à l'identifiant du M2M UE ; et
une deuxième unité de réception, configurée pour recevoir un message qui est envoyé par le M2M UE en réponse au message de déclenchement, et envoyer, à l'AS tiers, le message en réponse au message de déclenchement,
le message de déclenchement comprenant au moins l'identifiant de l'équipement utilisateur de communications de machine à machine M2M UE ; et
le M2M UE étant connecté à un réseau sur lequel le DT-AS est situé, le DT-AS étant un serveur dans un réseau 3GPP, et l'AS tiers étant un serveur M2M en dehors du réseau 3GPP, le serveur d'application de déclenchement de dispositif comprenant en outre une unité d'identification, et l'unité d'identification étant spécifiquement configurée pour :
identifier le message de déclenchement en fonction d'une adresse IP de l'AS tiers et/ou d'un numéro de port du DT-AS qui sont/est prédéfini(s) dans le message de déclenchement ; ou
lorsqu'un message est reçu en utilisant une adresse IP prédéfinie et/ou un numéro de port prédéfini, ladite adresse IP prédéfinie et/ou ledit numéro de port prédéfini ayant été convenus à l'avance par le DT-AS et l'AS tiers,
identifier le message comme étant le message de déclenchement.

10. Serveur d'application de déclenchement de dispositif selon la revendication 9, l'AS tiers communiquant avec le DT-AS en utilisant le protocole Diameter ou le protocole HTTP.
